# EUROPÄISCHE PATENTSCHRIFT

(11) **EP 1 260 077 B1**
(45) Veröffentlichungstag und Bekanntmachung des Hinweises auf die Patenterteilung: **13.04.2005**
(21) Anmeldenummer: 00904793.7
(22) Anmeldetag: 29.02.2000
(51) Int. Cl.: H04L 29/06

(54) **VERFAHREN ZUR TRANSAKTIONSBESTAETIGUNG, AUTHENTIFIZIERUNGSSERVER UND WAP-SERVER**
TRANSACTION CONFIRMATION METHOD, AUTHENTICATION SERVER AND WAP SERVER
PROCEDE DE CONFIRMATION DE TRANSACTION, SERVEUR D'AUTHENTIFICATION ET SERVEUR WAP

(43) Veröffentlichungstag der Anmeldung: 27.11.2002
(73) Patentinhaber: Swisscom Mobile AG, 3050 Bern (CH)
(72) Erfinder: HUBER, Adriano, CH-6600 Locarno (CH)
(74) Vertreter: P&TS Patents & Technology Surveys SA
(86) Internationale Anmeldenummer: PCT/CH2000/000116
(87) Internationale Veröffentlichungsnummer: WO 2001/065798

(56) Entgegenhaltungen:
- EP-A- 0 813 325
- WO-A-98/37524
- WO-A-99/56434
- US-A- 5 883 810
- HOOGENBOOM M ET AL: "Security For Remote Access And Mobile Applications" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, Bd. 19, Nr. 2, Februar 2000 (2000-02), Seiten 149-163, XP004204675 ISSN: 0167-4048
- OJANEN E. ET AL: 'Compressibility of WML and WMLScript byte code: Initial results' PROCEEDINGS TENTH INTERNATIONAL WORKSHOP ON RESEARCH ISSUES IN DATA ENGINEERING. RIDE 2000 2000, LOS ALAMITOS, CA, USA, Seiten 55 - 62

## Beschreibung

Die vorliegende Erfindung betrifft ein Verfahren, mit welchem ein Mobilteilnehmer eine Transaktion mit einem Dienstanbieter in einem Mobilfunknetz bestätigen kann.

Es sind schon verschiedene Verfahren bekannt, die es einem Mobilteilnehmer erlauben, eine Session mit einem Dienstanbieter herzustellen und Transaktionen durchzuführen, beispielsweise um Produkte oder Informationen zu bestellen oder um Geldtransaktionen durchzuführen. Mit WAP (Wireless Application Protocol) können beispielsweise sogenannte WAP-Karten von verschiedenen Dienstanbietern zur Verfügung gestellt werden und von Mobilteilnehmern mit geeigneten WAP-Browsern in WAP-tauglichen Mobilgeräten wiedergegeben werden. Auf jeder WAP-Karte können sich ein oder mehrere Angebote befinden, die vom Mobilteilnehmer mittels geeigneter Eingabemittel selektiert werden können, beispielsweise um ein Produkt oder eine Information zu bestellen.

Das WAP-Protokoll wird unter anderem in der Druckschrift von E. Ojanen et al.: "Compressibility of WML and WMLScript byte code: Initial results", Research Issues in Data Engineering, 2000. RIDE 2000. Proceedings. Tenth International Workshop in San Diego, CA, USA 28-29 Feb. 2000, IEEE Computer Society USA, 28.02.2000, Seiten 55-62, ISBN 0-7695-0531-7 beschrieben. Dieser Artikel beschreibt unter anderem WAP-Server und WAP-Karten mit WML-Skripten.

Es wurde ausserdem auch beschrieben, wie man eine Web-Seite über ein Mobilfunknetz übertragen und auf einem Mobilgerät (beispielsweise einem Palmtop oder Laptop mit Funkschnittstelle) wiedergeben kann.

Will der Mobilteilnehmer eine Transaktion mit einem WAP- oder WEB-Dienstanbieter durchführen, muss er das entsprechende Angebot selektieren, beispielsweise durch anklicken des Angebots auf einer graphischen Oberfläche oder mit der Tastatur. Eine Transaktionsbestätigung wird dann automatisch vorbereitet und an den Dienstanbieter übertragen.

Damit der Dienstanbieter sicher sein kann, dass die Transaktionsbestätigung tatsächlich vom angegebenen Mobilteilnehmer gesendet wurde, muss ein Identifizierungsmechanismus vorgesehen werden. Zu diesem Zweck kann beispielsweise der Browser im Mobilgerät oder in der WIM-Karte des Mobilgeräts die Transaktionsbestätigung mit einem privaten Schlüssel signieren, der sich in einem von einer Drittinstanz zertifizierten Zertifikat befindet. Der Dienstanbieter kann dann mit dem öffentlichen Schlüssel des Mobilteilnehmers dessen Signatur und auf diese Weise seine Identität prüfen.

Die Patentanmeldung WO-A-9837524 beschreibt ein solches Zahlungstransaktionsverfahren, das auch Signierungsmittel einsetzt, jedoch weder WAP-Karten noch WEB-Seiten verwendet.

Dieses Authentifizierungsverfahren kann jedoch erst eingesetzt werden, wenn das Mobilgerät des Mobilteilnehmers über Signierungsmittel verfügt, unter anderem über ein Zertifikat das von einer vom Dienstanbieter anerkannten Zertifizierungsinstanz zertifiziert wurde, sowie über ein geeignetes Signierungsmodul. Ausserdem muss der Dienstanbieter über den passenden öffentlichen Schlüssel des Mobilteilnehmers verfügen. Einfache oder ältere Mobilgeräte besitzen jedoch keine passenden Signierungsmittel. Ausserdem werden viele Zertifizierungsinstanzen nur national oder von bestimmten Benutzergruppen anerkannt, so dass dieses Verfahren nicht zwischen jedem Mobilteilnehmer und jedem Dienstanbieter eingesetzt werden kann.

Es ist ein Ziel der vorliegenden Erfindung, ein neues Bestätigungsverfahren für Transaktionen mit Mobilgeräten anzubieten.

Ein anderes Ziel ist es, ein neues Transaktionsbestätigungsverfahren anzubieten, das auch mit Mobilgeräten ohne Signierungsmodul und mit solchen Mobilgeräten eingesetzt werden kann, die über kein Zertifikat verfügen, das von einer vom Dienstanbieter anerkannten Zertifizierungsinstanz zertifiziert wurde.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren erreicht, in welchem die Transaktionsbestätigung automatisch vom Mobilgerät an einen Authentifizierungsserver geleitet wird, wobei eine Vielzahl von Transaktionen zwischen verschiedenen Mobilteilnehmern und verschiedenen Dienstanbietern im benannten Authentifizierungsserver gespeichert sind. Der Dienstanbieter kann dann die Bestätigung vom benannten Authentifizierungsserver einholen.

Dies hat den Vorteil, dass sich Mobilteilnehmer für alle Transaktionen mit verschiedenen Dienstanbietern bei demselben Authentifizierungsserver identifizieren lassen können, anstatt für jeden Server jedes Dienstanbieters authentifizierbar sein zu müssen.

Wird der benannte Authentifizierungsserver vom Mobilfunknetzbetreiber oder von einem Betreiber mit einem Sonderabkommen mit dem Mobilfunknetzbetreiber verwaltet, können einfachere Authentifizierungsverfahren eingesetzt werden, die die im Identifikationsmodul im Mobilgerät gespeicherte Identität des Mobilteilnehmers verwenden.

In einer bevorzugten Variante besteht die benannte Bestätigung die vom benannten Mobilgerät gesendet wird aus einer USSD-Meldung, die aufgrund eines vorbestimmten Service Request Codes an einen bestimmten Authentifizierungsserver (beispielsweise an einen Server des Mobilfunknetzbetreibers) geleitet wird. Diese Variante erlaubt es, den Mobilteilnehmer einfach im HLR des Heimmobilfunknetzes zu identifizieren und diese Identität im Authentisierungsserver zu verwenden.

Im Folgenden werden anhand der beigefügten Zeichnungen bevorzugte Ausführungsbeispiele der Erfindung näher beschrieben:
Die Figur 1 zeigt ein Blockdiagramm, welches schematisch ein System darstellt, in welchem ein Mobilteilnehmer eine Transaktion mit einem Dienstanbieter mit einem Authentisierungsserver bestätigt.
Die Figur 2 zeigt schematisch die Struktur einer Bestätigungsmeldung, die von einem Mobilteilnehmer an den Authentisierungsserver gesendet wird.
Die Figur 3 zeigt schematisch die Struktur einer Bestätigungsmeldung, die im Authentisierungsserver gespeichert wird.

Obwohl diese Erfindung in mehreren Details den speziellen Fall der Ausführung in einem GSM-Mobilfunknetz beschreibt, wird der Fachmann verstehen, dass dieses Verfahren auch mit anderen Typen von Funknetzen, beispielsweise mit AMPS, TDMA, CDMA, TACS, PDC, HSCSD, GPRS, EDGE oder UMTS-Mobilfunknetzen eingesetzt werden kann, insbesondere mit WAP- (Wireless Application Protocol) fähigen Mobilfunknetzen. Diese Erfindung kann ausserdem in anderen Netzen, insbesondere im Internet oder in einem lokalen Netz gemäss Bluetooth oder HomeRF, verwendet werden.

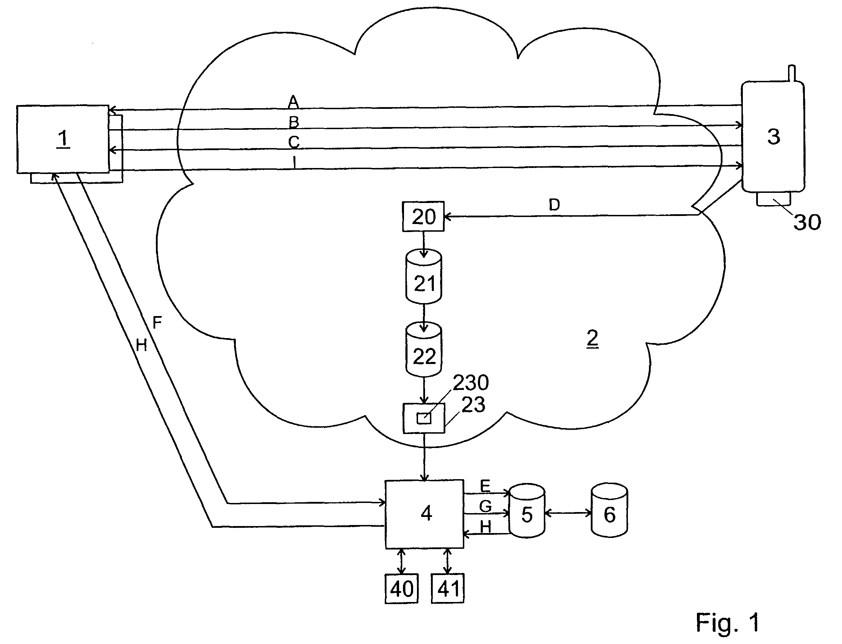

In der Figur 1 bezieht sich die Bezugsziffer 1 auf einen Dienstanbieter (Service Provider), der ein Angebot (beispielsweise für ein Produkt oder eine Information) zur Verfügung stellt. Der Dienstanbieter betreibt vorzugsweise einen Server (beispielsweise einen http oder WAP-Server) in welchem HTML-Seiten (Hypertext Markup Language) beziehungsweise WML-Karten (Wireless Markup Language) gespeichert sind. Auf jeder Seite oder Karte können sich Text, Bilder und/oder Hypertext-Elemente befinden. Mindestens ein Element auf einer Seite oder Karte entspricht einem vom Mobilteilnehmer selektierbaren Angebot.

Jede Seite oder Karte besitzt eine Adresse, beispielsweise eine URL-Adresse (Uniform Resource Locator), im Telekommunikationsnetz 2. Das Telekommunikationsnetz 2 ist vorzugsweise ein Mobilfunknetz, (beispielsweise ein GSM oder UMTS-Mobilfunknetz, oder Internet, oder ein lokales Netz gemäss Bluetooth). Mobilteilnehmer können sich mit ihren Mobilgeräten 3 im Mobilfunknetz 2 anmelden und eine Session mit dem Dienstanbieter 1 herstellen, indem sie die benannte URL-Adresse in einen Browser im Mobilgerät 3 eingeben. Im Mobilfunknetz befinden sich mehrere Dienstanbieter 1 und mehrere Mobilgeräte 3.

Die Mobilgeräte 3 bestehen beispielsweise aus einem Rechner (z.B. Palmtop oder Laptop) mit einer Mobilfunkschnittstelle (beispielsweise mit einem Mobilgerät in PC-Card-Format oder mit einer kontaktlosen Schnittstelle zu einem Mobilfunktelefon) und aus einem WEB und/oder WAP-Browser, der HTML und/oder WML-Seiten wiedergeben kann. Mindestens gewisse Mobilgeräte bestehen in einer bevorzugten Variante aus WAP-fähigen Mobilgeräten (beispielsweise aus Mobilfunktelefonen mit einem WML-fähigen Browser). Mobilgeräte 3 werden im Mobilfunknetz 2 anhand eines mit dem Mobilgerät verbundenen Identifizierungsmodul 30, beispielsweise anhand einer SIM- (Subscriber Identification Module), WIM-(WAP Identification Module) oder UIM- (UMTS Identification Module) Chipkarte, in welcher eine eindeutige und nicht verfälschbare Mobilteilnehmeridentifizierung, beispielsweise eine IMSI (International Mobile Subscriber Identification) abgelegt ist.

Das Mobilfunknetz 2 umfasst vorzugsweise mindestens eine Mobilvermittlungsstelle (MSC, Mobile Service Switching Center) 20, mindestens eine Besucherdatei (VLR, Visitor Location Register) 21 und mindestens eine Heimdatei (HLR, Home Location Register) 22. Die Heimdatei 22 wird von dem Netzbetreiber verwaltet, von welchem der Mobilfunkteilnehmer das Identifizierungsmodul 30 bezogen hat. Ein USSD-Handler 23 ist im HLR 22 enthalten oder mit ihm verbunden und prüft alle empfangenen USSD-Meldungen um zu entscheiden, welche Aktion damit ausgeführt werden soll. Ein Filter 230 in diesem USSD-Handler 23 erkennt unter anderem die für das erfindungsgemässe Verfahren angewandten und speziell markierten USSD-Meldungen und leitet sie an den Authentifizierungsserver 4 weiter, wie weiter unten beschrieben.

USSD-Meldungen (Unstructured Supplementary Service Data) wurden unter anderem beispielsweise im Standard GSM 02.90 vom European Telecommunications Standards Institute (ETSI) definiert und standardisiert.

Die Bezugsziffer 4 bezieht sich auf einen Authentifizierungsserver, beispielsweise auf einen UNIX, LINUX oder Windows-Server und wird beispielsweise vom Betreiber des Mobilfunknetzes 2 betrieben, oder von einer Instanz mit einem Sonderabkommen mit diesem Betreiber, damit speziell markierte USSD-Meldungen an ihn weitergeleitet werden. Der Server 4 enthält oder ist verbunden mit einer Datenbank 5, in welcher Transaktionsbestätigungen abgelegt werden. Eine zusätzliche Benutzerdatenbank 6 enthält Benutzerangaben, beispielsweise Namen, Adresse, usw. Im Server können ausserdem verschiedene Anwendungen 40, 41,.., abgelegt werden, die beim Empfang einer bestimmten USSD-Meldung durchgeführt werden, wie weiter unten beschrieben. Der Server 4 kann beispielsweise einen http- oder FTP-Server enthalten und über einen nicht dargestellten Router mit dem Internet verbunden sein.

Jeder Dienstanbieter 1 kann über ein nicht dargestelltes geeignetes Telekommunikationsnetz (beispielsweise über Internet) auf den Server 4 zugreifen, um Transaktionen die ihn betreffen abzuholen, z.B. mit einem http oder CORBA-Protokoll. Die Sessionen zwischen den Dienstanbietern 1 und dem Server 4 werden vorzugsweise gesichert, beispielsweise gemäss dem Protokoll SSL (Secure Sockets Layer), TLS (Transport Layer Security) oder WTLS (Wireless Transport Layer Security). Der Authentifizierungsserver 4 verfügt ausserdem über nicht dargestellte Signierungsmittel, mit welchen Meldungen und Sessionen mit den Dienstanbietern 1 gesichert werden können.

Wir werden jetzt ein Beispiel des erfindungsgemässen Verfahrens das mit diesem System durchgeführt werden kann näher beschreiben.

Der Mobilteilnehmer kann sich mit dem Mobilgerät 3 ein Angebot des Dienstanbieters 1 darstellen lassen, indem er die URL-Adresse der entsprechenden WAP-Karte oder Web-Seite in seinen Browser eingibt (Pfeil A). Die WML bzw. HTML-Seite wird dann über das Telekommunikationsnetz 2 (beispielsweise über ein zellulares Mobilfunknetz oder Internet) übertragen (Pfeil B) und auf der Anzeige oder mit sonstigen Wiedergabemitteln des Mobilgeräts 3 vom Browser in einer geeigneten Form wiedergegeben. Die Sessionen zwischen dem Dienstanbieter 1 und dem Mobilteilnehmer 3 können gesichert sein oder nicht.

Die WAP-Karte bzw. Web-Seite kann beispielsweise ein oder mehrere Hyperlinkelemente oder andere graphische Bedienungselemente (beispielsweise anklickbare Knöpfe oder Selektionskasten) enthalten, die vom Mobilteilnehmer mit geeigneten Bedienungselementen selektiert werden können, um das entsprechende Angebot auf der Karte oder Seite auszuwählen.

Sobald das Angebot selektiert worden ist, wird ein Skript erstellt, (beispielsweise ein WML, Java oder Javascript-Skript) das die Vorbereitung und Sendung einer USSD-Meldung veranlasst (Pfeil D). Die ganze USSD-Meldung wird vorzugsweise in dem mit der Web-Seite oder WAP-Karte übermittelten Skript angegeben; es ist jedoch auch möglich, dass mindestens gewisse Felder der USSD-Meldung vom Prozessor im Mobilgerät 3 oder im Identifizierungsmodul ermittelt werden (beispielsweise anhand von im Mobilgerät vorhandenen Angaben).

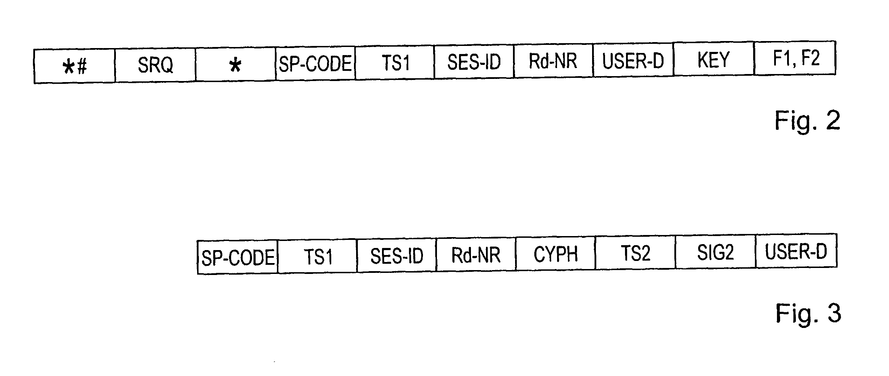

Die Struktur eines bevorzugten Beispiels von USSD ist auf der Figur 2 dargestellt. In diesem Beispiel enthält die USSD-Meldung von links nach rechts ein erstes Abgrenzungszeichen (in diesem Beispiel *#) gefolgt von einem dreistelligen Dienstcode SRQ. Gemäss den oben erwähnten Richtlinien GSM 02.90 kann der Dienstcode jeder mögliche Wert im Bereich von 100 bis 1999 sein. Der Dienstcode SRQ bestimmt, wohin die USSD-Meldung geleitet werden soll, insbesondere ob sie vom VLR in einem besuchten Mobilfunknetz oder vom HLR des Heimnetzes behandelt werden soll. Der Wert des SRQ-Feldes ist in dieser Anwendung für alle USSD festgelegt, damit alle Transaktionsbestätigungen als USSD an den Server 4 geleitet werden, wie später erläutert.

Ein zweites Abgrenzungszeichen wird nach dem Dienstcode SRQ verwendet (in diesem Beispiel ein *). Nach diesem Zeichen folgt ein Feld SP-Code mit einer Identifizierung des Dienstanbieters 1, vorzugsweise eine Identifizierung, die auch dem Betreiber des Netzes 4 bekannt ist, beispielsweise seine URL-Adresse oder der Titel der WAP-Karte oder Web-Seite, oder einfach eine Nummer.

Das nächste Feld TS1 enthält einen vom Dienstanbieter 1 gesetzten Zeitstempel, welcher das Datum und die Zeit der Übertragung der WAP-Karte oder Web-Seite angibt. Das Feld SES-ID enthält eine vom Dienstanbieter 1 definierte Identifizierung der Session durch das Netz 2, während welcher die WAP-Karte oder Web-Seite übermittelt wurde.

Das Feld Rd-Nr enthält ein Geheimnis vom Dienstanbieter (beispielsweise eine generierte Zufallnummer die für jede übertragene Kopie der WAP-Karte oder Web-Seite unterschiedlich ist und die vom Mobilteilnehmer nicht erraten werden kann).

Das Feld USER-D enthält im Mobilgerät 3 oder im Identifizierungsmodul 30 vorhandenen Angaben, beispielsweise die Identität (beispielsweise die IMSI) des Mobilteilnehmers, seine elektronische Signatur, seinen Standort, seine Sprache, seine Bestellungspräferenzen, usw. Es ist auch möglich, die USSD-Meldung mit Angaben aus einer externen Vorrichtung zum Beispiel aus einem POS (Point-of-Sale) im Nahbereich, zu ergänzen, die über eine kontaktlose Schnittstelle (bei gemäss Bluetooth, HomeRF oder IrdA) übertragen wurden. Die Identität des Mobilteilnehmers, sowie allenfalls andere Parameter, werden in einer bevorzugten Variante verschlüsselt.

Das Feld KEY enthält einen Verschlüsselungsschlüssel, mit welchem vom Mobilteilnehmer eingegebene oder vom Mobilgerät ermittelte Daten verschlüsselt werden können, um damit ein nur vom Dienstanbieter 1 entschlüsselbares Feld CYPHER zu ermitteln.

Zusätzliche Felder F1, F2, .. können ausserdem gesetzt werden, um bestimmte Anwendungen im Authentisierungsserver 4 durchführen zu lassen, wie später erläutert.

Der Fachmann wird verstehen, dass diese Struktur einer USSD-Meldung nur als Beispiel angegeben worden ist und dass zusätzliche Felder vorgesehen werden können während die hier beschriebenen Felder optional sind. Es ist beispielsweise durchaus denkbar, auch Datagramme zu senden, das heisst Meldungen mit Feldern, die ein ausführbares Programm oder Programmelement enthalten, beispielsweise mit einem JAVA-Applet (Warenzeichen von SUN Microsystems, Inc.)

Die im Mobilgerät 3 vorbereitete USSD-Meldung wird durch die Mobilvermittlungsstelle MSC 20, die Besucherdatei 21 (VLR, Visitor Location Register) und die Heimdatei 22 (HLR, Home Location Register) zum USSD-Handler 23 geleitet (Pfeil D), wo sie aufgrund des SRQ-Wertes vom Filtermodul 230 sortiert und zum Authentisierungsserver 4 weitergeleitet wird. Vorzugsweise wird vom benannten Script eine Bestätigung vorbereitet (Pfeil C), die mit einem geeigneten Bearer (E-Mail, SMS, usw..) direkt zum Dienstanbieter 1 gesendet wird, sobald der Mobilteilnehmer ein Angebot selektiert hat.

Im Authentisierungsserver 4 wird die USSD-Meldung empfangen und vorzugsweise mit zusätzlichen Feldern TS2 und/oder SIG2 ergänzt (Figur 3). Das Feld TS2 enthält einen Zeitstempel, der vom Authentisierungsserver beim Empfang der USSD-Meldung gesetzt wird und welcher das Empfangsdatum und die Empfangszeit angibt. Das Feld SIG2 enthält eine elektronische Signatur des Authentisierungsservers 4.

Der Authentisierungsserver 4 erfährt ausserdem vom USSD-Handler 23 die Identität des Mobilteilnehmers 3, beispielsweise seine IMSI. Der Fachmann wird feststellen, dass diese IMSI nicht verfälscht werden kann und dass es nicht möglich ist, eine USSD-Meldung mit der IMSI eines anderen Mobilteilnehmers zu senden. In einer bevorzugten Variante werden diese Benutzerangaben mit zusätzlichen Angaben aus einer Benutzerdatenbank 6 verknüpft, beispielsweise mit der Rechnungs- und/oder Lieferungsadresse.

Der Authentisierungsserver 4 legt dann die ergänzte Meldung in einer Transaktionsdatenbank 5 ab (Pfeil E), in welcher eine Vielzahl von Transaktionen zwischen verschiedenen Dienstanbietern und verschiedenen Mobilteilnehmern abgelegt werden. In der Datenbank 5 wird vorzugsweise ein Index auf das Feld SP-Code aufgebaut, damit die abgelegten Daten schnell nach Dienstanbieter sortiert werden können.

Verschiedene Anwendungen 40, 41, .. im Server 4 können ausserdem durchgeführt werden, wenn ein Flag F1, F2, .. gesetzt ist oder wenn besondere Bedingungen erfüllt sind, um eine bestimmte Aktion auszulösen. Wird der Server 4 vom Betreiber des Mobilfunknetzes 2 betrieben, ist es beispielsweise möglich, einem Konto des Mobilteilnehmers 3 und/oder des Dienstanbieters 1 eine Gebühr zu belasten.

Die Dienstanbieter 1 können eine Anfrage F an den Server 4 senden, um zu prüfen, ob Transaktionsbestimmungen in der Datenbank 5 abgelegt wurden. Anfragen können beispielsweise periodisch, nach Empfang der Bestätigung C oder nach einer vorbestimmten Zeit nach dem Fernladen der einer WAP-Karte oder Web-Seite gesendet werden. Die Anfrage wird beispielsweise durch Internet oder durch ein Mobilfunknetz während einer vorzugsweise gesicherten Session übertragen. Im Authentisierungsserver 4 wird vorzugsweise die Identität des Dienstanbieters 1 geprüft (beispielsweise anhand von bekannten Authentisierungsmechanismen mit elektronischen Signaturen, mit einem Passwort oder allgemein mit einem geteilten Geheimnis) und die Zugriffsberechtigung des Dienstanbieters 1 auf den Inhalt der Transaktionsdatenbank 5 wird getestet. Ist das Ergebnis dieser Prüfung positiv, wird die Anfrage an die Transaktionsdatenbank 5 weitergeleitet (Pfeil G), die mit der auf der Figur 3 dargestellten Transaktionsbestätigung antwortet (Pfeil H). Diese Antwort wird dann vorzugsweise vom Server 4 elektronisch signiert und/ oder verschlüsselt und an den Dienstanbieter 1 weitergeleitet (Pfeil H).

In einer Variante der Erfindung wird die Benutzeridentifizierung (USER-D) aus der Antwort (Pfeil H) entfernt, damit der Benutzer gegenüber dem Dienstanbieter anonym bleibt. Auf diese Weise können auch für den Dienstanbieter 1 anonyme Zahlungen durchgeführt werden.

In einer Variante der Erfindung muss der Dienstanbieter nicht selbst Anfragen an den Authentifizierungsserver 4 senden, sondern wird von ihm informiert, wenn eine Transaktionsbestätigung angekommen ist. Zu diesem Zweck kann ein Script im Server 4 vorgesehen werden, das Bestätigungen, oder vorzugsweise nur speziell markierte Bestätigungen, automatisch an den entsprechenden Dienstanbieter weiterleitet.

Der Dienstanbieter kann dann aufgrund der empfangenen Bestätigung den Mobilteilnehmer zuverlässig identifizieren. Anhand der Sessions-Identifizierung SES-ID, des Zeitstempels TS1, der Zufallsnummer Rd-Nr und eventuell der anderen vom Mobilgerät 3 und/oder vom Server 4 gesetzten Felder kann er ausserdem prüfen, ob die empfangenen Daten wirklich einer von ihm gesendeten WAP-Karte oder Web-Seite entsprechen.

Auf diese Weise kann der Dienstanbieter 1 sicher sein, dass wirklich der Mobilteilnehmer 3 der Ursprung der empfangenen Bestätigung ist und kann somit die Transaktion durchführen, indem beispielsweise ein bestelltes Produkt gesendet wird und/oder indem die angebotene Information über das Mobilfunknetz 2 gesendet wird. Vorzugsweise wird dem Mobilteilnehmer eine Bestätigung gesendet (Pfeil I).

Der Fachmann wird verstehen, dass im Rahmen dieser Erfindung auch andere Meldungen als USSD-Meldungen verwendet werden können. Ausserdem ist es möglich, mehrere Authentisierungsserver 4 einzusetzen, die beispielsweise mit anderen SRQ-Codes erreicht werden. Auf diese Weise kann ein Dienstanbieter durch Auswahl eines anderen SRQ-Codes entscheiden, in welchen Authentisierungsserver 4 die Authentisierungsdaten für eine bestimmte Transaktion abgelegt werden sollen.

Die Verwendung des Authentisierungsservers 4 kann beispielsweise im Rahmen von Benutzerverträgen zwischen dem Betreiber des Servers 4 und den Dienstanbietern 1 fakturiert werden, wobei der verrechnete Preis beispielsweise von der Anzahl der empfangenen Transaktionen abhängig sein kann. Zu diesem Zweck kann ein Transaktionszähler im Server 4 vorgesehen werden, welcher während einer vordefinierten Zeitspanne für jeden Dienstanbieter 1 die Anzahl von Transaktionen zählt.

Vorzugsweise wird ein Profil für jeden registrierten Dienstanbieter 1 im Server 4 gespeichert, in welchem unter anderem die Identität des Dienstanbieters, der entsprechende SP-Code, eventuell seine Rechnungsadresse und eventuelle Präferenzen (beispielsweise über die Art wie die Transaktionsbestätigungen in der Transaktionsdatenbank 5 abgelegt werden sollen) gespeichert sind.

## Patentansprüche

1. Verfahren, mit welchem ein Mobilteilnehmer eine Transaktion mit einem Dienstanbieter (1) bestätigt, **dadurch gekennzeichnet,**
**dass** ein Angebot des benannten Dienstanbieters (1) mit einem Mobilgerät (3) des benannten Mobilteilnehmers wiedergegeben wird,
**dass** der benannte Mobilteilnehmer das benannte Angebot mit Eingabemitteln seines Mobilgeräts (3) selektiert,
**dass** eine Transaktionsbestätigung automatisch vom benannten Mobilgerät an einen Authentifizierungsserver geleitet wird (D), wobei eine Vielzahl von Transaktionsbestätigungen zwischen verschiedenen Mobilteilnehmern (3) und verschiedenen Dienstanbietern (1) im benannten Authentifizierungsserver (4) gespeichert sind,
und **dass** der benannte Dienstanbieter (1) die benannte Transaktionsbestätigung vom benannten Authentifizierungsserver einholt (F-H).

2. Verfahren gemäss Anspruch 1, **dadurch gekennzeichnet, dass** das benannte Angebot in einer WAP-Karte des benannten Dienstanbieters enthalten ist, die von einem Browser im benannten Mobilgerät (3) wiedergegeben wird.

3. Verfahren gemäss Anspruch 1, **dadurch gekennzeichnet, dass** das benannte Angebot in einer Web-Seite enthalten ist, die von einem Browser im benannten Mobilgerät (3) wiedergegeben wird.

4. Verfahren gemäss einem der vorhergehenden Ansprüche, **dadurch gekennzeichnet, dass** die benannte Transaktionsbestätigung, die vom benannten Mobilgerät (3) gesendet wird, aus einer USSD-Meldung besteht.

5. Verfahren gemäss dem vorhergehenden Anspruch, **dadurch gekennzeichnet, dass** die benannte USSD-Meldung automatisch von einem Script, das in einer WAP-Karte oder Web-Seite enthalten ist, vorbereitet und gesendet wird, wenn der benannte Mobilteilnehmer ein Angebot auf dieser Karte bzw. Seite selektiert.

6. Verfahren gemäss dem vorhergehenden Anspruch, **dadurch gekennzeichnet, dass** das benannte Script ein WML-Script ist.

7. Verfahren gemäss einem der vorhergehenden Ansprüche, **dadurch gekennzeichnet, dass** die benannte Transaktionsbestätigung eine Dienstanbieteridentifizierung (SP-Code) enthält.

8. Verfahren gemäss einem der vorhergehenden Ansprüche, **dadurch gekennzeichnet, dass** die benannte Transaktionsbestätigung einen Zeitstempel (TS1) vom benannten Dienstanbieter (1) enthält.

9. Verfahren gemäss einem der vorhergehenden Ansprüche, **dadurch gekennzeichnet, dass** die benannte Transaktionsbestätigung eine Sessionsidentifizierung (SES-ID) enthält.

10. Verfahren gemäss einem der vorhergehenden Ansprüche, **dadurch gekennzeichnet, dass** die benannte Transaktionsbestätigung ein nur dem Dienstanbieter (1) bekanntes Geheimnis (Rd-Nr) enthält.

11. Verfahren gemäss dem vorhergehenden Anspruch, **dadurch gekennzeichnet, dass** das benannte Geheimnis (Rd-Nr) eine vom benannten Dienstanbieter festgelegte Zufallsnummer ist.

12. Verfahren gemäss einem der vorhergehenden Ansprüche, **dadurch gekennzeichnet, dass** die benannte Transaktionsbestätigung eine Benutzeridentifizierung enthält.

13. Verfahren gemäss einem der Ansprüche 1 bis 4, **dadurch gekennzeichnet, dass** mindestens ein Teil der benannten Transaktionsbestätigungen durch ein Script im benannten Mobilgerät (3) vorbereitet wird.

14. Verfahren gemäss einem der Ansprüche 1 bis 4, **dadurch gekennzeichnet, dass** mindestens ein Teil (USER-D) der benannten Transaktionsbestätigung durch ein Script im benannten Mobilgerät mit einem Schlüssel (KEY) des Dienstanbieters (1) verschlüsselt wird.

15. Verfahren gemäss einem der vorhergehenden Ansprüche, **dadurch gekennzeichnet, dass** die benannte Transaktionsbestätigung ein Datagramm, das ein Programm oder Programmelement enthält, das vom benannten Authentifizierungsserver aus geführt wird, umfasst.

16. Verfahren gemäss einem der vorhergehenden Ansprüche, **dadurch gekennzeichnet, dass** die benannte Transaktionsbestätigung mindestens ein Flag (F1, F2, ..), das die Durchführung einer Anwendung im benannten Authentifizierungsserver (4) verursacht, enthält.

17. Verfahren gemäss einem der vorhergehenden Ansprüche, **dadurch gekennzeichnet, dass** die benannte Transaktionsbestätigung in einer Transaktionsdatenbank (5) im benannten Authentifizierungsserver (4) abgelegt wird.

18. Verfahren gemäss dem vorhergehenden Anspruch, **dadurch gekennzeichnet, dass** der benannte Authentifizierungsserver (4) eine Benutzerdatenbank (6) enthält, in welcher Mobilteilnehmerangaben abgelegt sind,
und dass mindestens gewisse dieser Mobilteilnehmerangaben mit der benannten Transaktionsbestätigung im benannten Authentifizierungsserver (4) verknüpft werden.

19. Verfahren gemäss einem der vorhergehenden Ansprüche, **dadurch gekennzeichnet, dass** die benannte Transaktionsbestätigung vom benannten Authentifizierungsserver (4) elektronisch signiert wird.

20. Verfahren gemäss einem der vorhergehenden Ansprüche, **dadurch gekennzeichnet, dass** die benannte Transaktionsbestätigung vom benannten Authentifizierungsserver beim Empfang mit einem Zeitstempel (TS2) versehen wird.

21. Verfahren gemäss einem der vorhergehenden Ansprüche, **dadurch gekennzeichnet, dass** die benannte Transaktionsbestätigung im benannten Authentifizierungsserver (4) abgelegt wird und dass der benannte Dienstanbieter (1) eine Anfrage an den benannten Authentifizierungsserver (4) sendet (F), um zu prüfen, ob die Transaktionsbestätigung angekommen ist.

22. Verfahren gemäss dem vorhergehenden Anspruch, **dadurch gekennzeichnet, dass** der benannte Authentifizierungsserver (4) einen http-Server umfasst und dass sich der benannte Dienstanbieter (1) über Internet mit dem benannten Authentifizierungsserver verbindet, um zu prüfen, ob eine Transaktionsbestätigung angekommen ist.

23. Verfahren gemäss einem der Ansprüche 21 oder 22, **dadurch gekennzeichnet, dass** sich der benannte Dienstanbieter beim benannten Authentifizierungsserver (4) elektronisch authentifizieren lassen muss, um Transaktionsbestätigungen abzuholen.

24. Verfahren gemäss einem der Ansprüche 1 bis 20, **dadurch gekennzeichnet, dass** die benannte Transaktionsbestätigung automatisch vom benannten Authentifizierungsserver (4) an den benannten Dienstanbieter weitergeleitet wird.

25. Verfahren gemäss einem der Ansprüche 21 bis 24, **dadurch gekennzeichnet, dass** der benannte Dienstanbieter eine Transaktionsbestätigung (I) an den benannten Mobilteilnehmer sendet, sobald er die benannte Transaktionsbestätigung (H) vom benannten Authentifizierungsserver eingeholt hat.

26. WAP-Server (1), in welchem WAP-Karten abgelegt sind, die von einer Vielzahl von Mobilteilnehmern mit WAP-tauglichen Mobilgeräten (3) abgeholt werden können, wobei die benannten WAP-Karten Angebote enthalten, **dadurch gekennzeichnet, dass** mindestens gewisse der benannten WAP-Karten ein Script umfassen, das geeignet ist, die Sendung einer Transaktionsbestätigung als USSD-Meldung an einen vorbestimmten Authentifizierungsserver (4) zu veranlassen, wenn ein benanntes Angebot mit einem WAP-Browser in einem benannten Mobilgerät (3) selektiert wird.

27. WAP-Server gemäss dem vorhergehenden Anspruch, **dadurch gekennzeichnet, dass** die benannte USSD-Meldung eine Dienstanbieteridentifizierung (SP-Code) enthält.

28. WAP-Server gemäss einem der Ansprüche 26 bis 27, **dadurch gekennzeichnet, dass** die benannte WAP-Karte einen Zeitstempel (TS1) umfasst, welcher die Fernladezeit der WAP-Karte bestimmt und dass das benannte Script eine Kopie dieses Zeitstempels in die benannte USSD-Meldung macht.

29. WAP-Server gemäss einem der Ansprüche 26 bis 28, **dadurch gekennzeichnet, dass** die benannte USSD-Meldung eine Sessionsidentifizierung (SES-ID) enthält.

30. WAP-Server gemäss einem der Ansprüche 26 bis 29, **dadurch gekennzeichnet, dass** die benannte USSD-Meldung ein nur dem Dienstanbieter bekanntes Geheimnis (Rd-Nr) enthält.

31. WAP-Server gemäss dem vorhergehenden Anspruch, **dadurch gekennzeichnet, dass** das benannte Geheimnis (Rd-Nr) eine vom benannten Dienstanbieter (1) festgelegte Zufallsnummer ist.

32. Authentifizierungsserver (4), der mit einem Mobilfunknetz (2) derart verbunden ist, dass USSD-Meldungen mit einem vorbestimmten USSD Service Request Code an ihn geleitet werden, **dadurch gekennzeichnet,**
**dass** er eine Transaktionsdatenbank (5) enthält, in welcher Transaktionsbestätigungen, die in den benannten USSD-Meldungen enthalten sind, abgelegt werden, wobei eine Vielzahl von Transaktionsbestätigungen zwischen verschiedenen Mobilteilnehmern (3) und verschiedenen Dienstanbietern (1) empfangen und gespeichert werden;
und **dass** er einen Server umfasst, mit welchem sich benannte Dienstanbieter (1) über Internet verbinden können, um zu prüfen, ob eine Transaktionsbestätigung angekommen ist.

33. Authentifizierungsserver gemäss Anspruch 32, **dadurch gekennzeichnet, dass** er ein Authentifizierungsmodul umfasst, das die benannten Dienstanbieter (1) authentifiziert, bevor diese Transaktionsbestätigungen einholen können.

34. Authentifizierungsserver gemäss einem der Ansprüche 32 bis 33, **dadurch gekennzeichnet, dass** er mindestens ein Anwendungsprogramm (40, 41, ..) enthält, und dass er geeignet ist, das benannte Programm auszuführen, wenn ein bestimmtes Flag (F1, F2, ..) in ankommenden USSD gesetzt ist.

35. Authentifizierungsserver gemäss einem der Ansprüche 32 bis 34, **dadurch gekennzeichnet, dass** er eine Benutzerdatenbank (6) enthält, in welcher Mobilteilnehmerangaben abgelegt sind,
und dass er geeignet ist, mindestens gewisse dieser Mobilteilnehmerangaben mit der benannten Transaktionsbestätigung zu verknüpfen.

36. Authentifizierungsserver gemäss einem der Ansprüche 32 bis 35, **dadurch gekennzeichnet, dass** er geeignet ist, die ankommenden USSD elektronisch zu signieren.

37. Authentifizierungsserver gemäss einem der Ansprüche 32 bis 36, **dadurch gekennzeichnet, dass** er geeigmet ist, die ankommenden USSD mit einem Zeitstempel (TS2) zu versehen.

38. Authentifizierungsserver gemäss einem der Ansprüche 32 bis 37, **dadurch gekennzeichnet, dass** er ein Profil für jeden registrierten Dienstanbieter (1) enthält.

## Claims

1. A method, with which a mobile user can confirm a transaction with a service provider (1), **characterized in that**
an offer of said service provider (1) is reproduced with a mobile device (3) of said mobile user,
said mobile user selects said offer with input means of his mobile device (3),
a transaction confirmation is forwarded automatically by said mobile device to an authentication server (D), a plurality of transaction confirmations between different mobile users (3) and different service providers (1) being stored in said authentication server (4),
and **in that** said service provider (1) can retrieve said confirmation from said authentication server (F-H).

2. Method according to claim 1, **characterized in that** said offer is contained in a WAP card of said service provider that is reproduced by a browser in said mobile device (3).

3. Method according to claim 1, **characterized in that** said offer is contained in a web page that is reproduced by a browser in said mobile device (3).

4. Method according to one of the preceding claims, **characterized in that** said transaction confirmation sent by said mobile device (3) consists of a USSD message.

5. Method according to the preceding claim, **characterized in that** said USSD message is automatically prepared and sent by a script contained in said WAP card or web page when said mobile user selects an offer on this card resp. page.

6. Method according to the preceding claim, **characterized in that** said script is a WML script.

7. Method according to one of the preceding claims, **characterized in that** said transaction confirmation contains a service provider identification (SP-Code).

8. Method according to the preceding claim, **characterized in that** said transaction confirmation contains a time stamp (TS1) from said service provider (1).

9. Method according to one of the preceding claims, **characterized in that** said transaction confirmation contains a session identification (SES-ID).

10. Method according to one of the preceding claims, **characterized in that** said transaction confirmation contains a secret (Rd-Nr) known only to the service provider (1).

11. Method according to the preceding claim, **characterized in that** said secret (Rd-Nr) is a random number set by said service provider.

12. Method according to one of the preceding claims, **characterized in that** said transaction confirmation contains a user identification.

13. Method according to one of the claims 1 to 4, **characterized in that** at least part of said transaction confirmations is prepared by a script in said mobile device (3).

14. Method according to one of the claims 1 to 4, **characterized in that** at least part (USER-D) of said transaction confirmation is encrypted by a script in said mobile device with a key (KEY) of the service provider (1).

15. Method according to one of the preceding claims, **characterized in that** said transaction confirmation contains a datagram, comprising a program or program element, that is executed by said authentication server.

16. Method according to one of the preceding claims, **characterized in that** said transaction confirmation contains at least one flag (F1, F2, ...) that causes the execution of an application in said authentication server (4).

17. Method according to one of the preceding claims, **characterized in that** said transaction confirmation is stored in a transaction database (5) in said authentication server (4).

18. Method according to the preceding claim, **characterized in that** said authentication server (4) contains a user database (6) in which mobile user indications are stored,
and **in that** at least certain of these mobile users are linked with said transaction confirmation in said authentication server (4).

19. Method according to one of the preceding claims, **characterized in that** said transaction confirmation is signed electronically by said authentication server (4).

20. Method according to one of the preceding claims, **characterized in that** said transaction confirmation is provided upon receipt with a time stamp (TS2) by the authentication server.

21. Method according to one of the preceding claims, **characterized in that** said transaction confirmation is stored in said authentication server (4) and **in that** said service provider (1) sends (F) a query to said authentication server (4) to check whether the confirmation has arrived.

22. Method according to the preceding claim, **characterized in that** said authentication server (4) comprises a http server and **in that** said service provider (1) connects over the Internet with said authentication server to check whether a confirmation has arrived.

23. Method according to one of the claims 21 or 22, **characterized in that** said service provider must authenticate itself electronically to the authentication server (4) in order to retrieve transaction confirmations.

24. Method according to one of the claims 1 to 20, **characterized in that** said transaction confirmation is forwarded automatically by said authentication server (4) to said service provider.

25. Method according to one of the claims 21 to 24, **characterized in that** said service provider sends a transaction confirmation (I) to said mobile user as soon as he has retrieved said transaction confirmation (H) from said authentication server.

26. WAP server (1), in which WAP cards are stored that can be retrieved by a plurality of mobile users with WAP-capable mobile devices (3), said WAP cards containing offers, **characterized in that** at least certain of said WAP cards contain a script with which a transaction confirmation can be sent as USSD message to a predetermined authentication server (4) if a said offer is selected with a WAP browser in a said mobile device (3).

27. WAP server according to the preceding claim, **characterized in that** said USSD message contains a service provider identification (SP-Code).

28. WAP server according to one of the claims 26 to 27, **characterized in that** said WAP card comprises a time stamp (TS1) that determines the time of download of the WAP card and **in that** said script makes a copy of this time stamp in said USSD message.

29. WAP server according to one of the claims 26 to 28, **characterized in that** said USSD message contains a session identification (SES-ID).

30. WAP server according to one of the claims 26 to 29, **characterized in that** said USSD message contain a secret (Rd-Nr) known only to the service provider.

31. WAP server according to the preceding claim, **characterized in that** said secret (Rd-Nr) is a random number set by said service provider (1).

32. Authentication server (4) that is connected with a mobile radio network (2) in such a manner that USSD messages can be forwarded to it with a predetermined USSD Service Request Code, **characterized in that**
it contains a transaction database (5) in which transaction confirmations contained in said USSD messages are stored, a plurality of transaction confirmations between different mobile users (3) and different service providers (1) being received and stored;
and **in that** it comprises a server with which said services providers (1) can connect over the Internet to check whether a transaction confirmation has arrived.

33. Authentication server according to claim 32, **characterized in that** it comprises an authentication module that authenticates said service providers (1) before these can retrieve transaction confirmations.

34. Authentication server according to one of the claims 32 to 33, **characterized in that** is contains at least one application program (40, 41,...) and **in that** it is suited to execute said program when a certain flag (F1, F2, ...) is set in incoming USSDs.

35. Authentication server according to one of the claims 32 to 34, **characterized in that** it contains a user database (6) in which mobile user indications are stored,
and **in that** at least certain of these mobile user indications are linked with said transaction confirmation.

36. Authentication server according to one of the claims 32 to 35, **characterized in that** is suited to electronically sign the incoming USSDs.

37. Authentication server according to one of the claims 32 to 36, **characterized in that** it is suited to provide the incoming USSDs with a time stamp (TS2).

38. Authentication server according to one of the claims 32 to 37, **characterized in that** it contains a profile for each registered service provider (1).

## Revendications

1. Procédé, avec lequel un abonné mobile confirme une transaction avec un fournisseur de services (1), **caractérisé**
**en ce qu'**une offre dudit fournisseur de services (1) est reproduite avec un appareil mobile (3) dudit abonné mobile,
**en ce que** ledit abonné mobile sélectionne ladite offre dudit fournisseur de services avec des moyens d'introduction de son appareil mobile (3),
**en ce qu'**une confirmation de transaction est acheminée (D) automatiquement dudit appareil mobile à un serveur d'authentification, une pluralité de confirmations de transaction entre différents abonnés mobiles (3) et différents fournisseurs de services (1) étant mémorisées dans ledit serveur d'authentification (4),
et **en ce que** ledit fournisseur de services (1) prend (F-H) ladite confirmation de transaction dudit serveur d'authentification.

2. Procédé selon la revendication 1, **caractérisé en ce que** ladite offre est contenue dans une carte WAP dudit fournisseur de services qui est reproduite par un navigateur dans ledit appareil mobile (3).

3. Procédé selon la revendication 1, **caractérisé en ce que** ladite offre est contenue dans une page web qui est reproduite par un navigateur dans ledit appareil mobile (3).

4. Procédé selon l'une des revendications précédentes, **caractérisé en ce que** ladite confirmation de transaction qui est envoyée par ledit appareil mobile (3) consiste en un message USSD.

5. Procédé selon la revendication précédente, **caractérisé en ce que** ledit message USSD est préparé et envoyé automatiquement par un script qui est contenu dans une carte WAP ou page web lorsque ledit abonné mobile sélectionne une offre sur cette carte, resp. page.

6. Procédé selon la revendication précédente, **caractérisé en ce que** ledit script est un script WML.

7. Procédé selon l'une des revendications précédentes, **caractérisé en ce que** ladite confirmation de transaction contient une identification de fournisseur de services (SP-Code).

8. Procédé selon l'une des revendications précédentes, **caractérisé en ce que** ladite confirmation de transaction contient un chronotimbre (TS1) dudit fournisseur de services (1).

9. Procédé selon l'une des revendications précédentes, **caractérisé en ce que** ladite confirmation de transaction contient une identification de session (SES-ID).

10. Procédé selon l'une des revendications précédentes, **caractérisé en ce que** ladite confirmation de transaction contient un secret (Rd-Nr) connu seulement du fournisseur de services (1).

11. Procédé selon la revendication précédente, **caractérisé en ce que** ledit secret (Rd-Nr) est un numéro aléatoire déterminé par le fournisseur de services.

12. Procédé selon l'une des revendications précédentes, **caractérisé en ce que** ladite confirmation de transaction contient une identification d'utilisateur.

13. Procédé selon l'une des revendications 1 à 4, **caractérisé en ce qu'**au moins une partie desdites confirmations de transaction est préparée par un script dans ledit appareil mobile (3).

14. Procédé selon l'une des revendications 1 à 4, **caractérisé en ce qu'**au moins une partie (USER-D) de ladite confirmation de transaction est codée par un script dans ledit appareil mobile avec une clé (KEY) du fournisseur de services (1).

15. Procédé selon l'une des revendications précédentes, **caractérisé en ce que** ladite confirmation de transaction comprend un datagramme qui contient un programme ou élément de programme qui est exécuté par ledit serveur d'authentification.

16. Procédé selon l'une des revendications précédentes, **caractérisé en ce que** ladite confirmation de transaction contient au moins un indicateur (F1, F2, ..) qui provoque l'exécution d'une application dans ledit serveur d'authentification (4).

17. Procédé selon l'une des revendications précédentes, **caractérisé en ce que** ladite confirmation de transaction est entrée dans une banque de données de transactions (5) dans ledit serveur d'authentification (4).

18. Procédé selon la revendication précédente, **caractérisé en ce que** ledit serveur d'authentification (4) contient une banque de données d'utilisateurs (6) dans laquelle des données d'utilisateur mobile sont entrées,
et **en ce qu'**au moins certaines des ces données d'utilisateur mobile sont reliées à ladite confirmation de transaction dans ledit serveur d'authentification (4).

19. Procédé selon l'une des revendications précédentes, **caractérisé en ce que** ladite confirmation de transaction est signée électroniquement par ledit serveur d'authentification (4).

20. Procédé selon l'une des revendications précédentes, **caractérisé en ce que** ladite confirmation de transaction est pourvu d'un chronotimbre (TS2) par ledit serveur d'authentification lors de la réception.

21. Procédé selon l'une des revendications précédentes, **caractérisé en ce que** ladite confirmation de transaction est entrée en mémoire dans ledit serveur d'authentification (4) et que ledit fournisseur de services (1) envoie (F) une demande audit serveur d'authentification (4) pour vérifier si la confirmation de transaction est arrivée.

22. Procédé selon la revendication précédente, **caractérisé en ce que** ledit serveur d'authentification (4) comprend un serveur http et que ledit fournisseur de services (1) se connecte audit serveur d'authentification à travers Internet pour vérifier si une confirmation de transaction est arrivée.

23. Procédé selon l'une des revendications 21 ou 22, **caractérisé en ce que** ledit fournisseur de services doit se faire authentifier électroniquement auprès du serveur d'authentification (4) pour aller chercher des confirmations de transaction.

24. Procédé selon l'une des revendications 1 à 20, **caractérisé en ce que** ladite confirmation de transaction est retransmise automatiquement dudit serveur d'authentification (4) audit fournisseur de services.

25. Procédé selon l'une des revendications 21 à 24, **caractérisé en ce que** ledit fournisseur de services envoie une confirmation de transaction (I) audit abonné mobile dès qu'il a pris ladite confirmation de transaction (H) dudit serveur d'authentification.

26. Serveur WAP (1) dans lequel des cartes WAP qui peuvent être reprises par une pluralité d'abonnés mobiles avec des appareils mobiles (3) dont on peut se servire pour le WAP sont entrées en mémoire, lesdites cartes WAP contenant des offres, **caractérisé en ce qu'**au moins certaines dites cartes WAP comprennent un script qui est adapté pour provoquer l'envoi d'une confirmation de transaction sous la forme d'un message USSD à un serveur d'authentification prédéterminé lorsque qu'une dite offre est sélectionnée avec un navigateur WAP dans un dit appareil mobile (3)

27. Serveur WAP selon la revendication précédente, **caractérisé en ce que** ledit message USSD contient une identification de fournisseur de services (SP-Code).

28. Serveur WAP selon l'une des revendications 26 à 27, **caractérisé en ce que** ladite carte WAP comprend un chronotimbre (TS1) qui détermine le temps de téléchargement de la carte WAP et **en ce que** ledit script fait une copie de ce chronotimbre dans ledit message USSD.

29. Serveur WAP selon l'une des revendications 26 à 28, **caractérisé en ce que** ledit message USSD contient une identification de session (SES-ID).

30. Serveur WAP selon l'une des revendications 26 à 29, **caractérisé en ce que** ledit message USSD contient un secret (Rd-Nr) connu seulement du fournisseur de services.

31. Serveur WAP selon la revendication précédente, **caractérisé en ce que** ledit secret (Rd-Nr) est un numéro aléatoire déterminé par ledit fournisseur de services (1).

32. Serveur d'authentification (4), qui est relié avec un réseau radiomobile (2) de telle manière que des messages USSD avec un USSD Service Request Code prédéterminé lui sont acheminés, **caractérisé**
**en ce qu'**il contient une banque de données de transactions (5) dans laquelle sont entrées les confirmation de transactions qui sont contenues dans lesdits messages USSD, une pluralité de confirmations de transaction entre différents abonnés mobiles (3) et différents fournisseurs de services (1) étant reçus et mémorisés,
et **en ce qu'**il comprend un serveur avec lequel lesdits fournisseurs de services (1) peuvent se connecter à travers Internet pour vérifier si une confirmation de transaction est arrivée.

33. Serveur d'authentification selon la revendication 32, **caractérisé en ce qu'**il comprend un module d'authentification qui authentifie lesdits fournisseurs de services (1) avant qu'ils ne puissent aller chercher ces confirmations de transaction.

34. Serveur d'authentification selon l'une des revendications 32 à 33, **caractérisé en ce qu'**il contient au moins un programme d'application (40, 41, ..) et **en ce qu'**il est adapté pour exécuter ledit programme lorsqu'un certain indicateur (F1, F2, ..) est activé dans des USSD entrants.

35. Serveur d'authentification selon l'une des revendication 32 à 34, **caractérisé en ce qu'**il contient une banque de données d'utilisateurs (6) dans laquelle sont entrées des données d'abonné mobile,
et **en ce qu'**il est adapté pour rattacher au moins certaines de ces données d'abonné mobile à ladite confirmation de transaction.

36. Serveur d'authentification selon l'une des revendications 32 à 35, **caractérisé en ce qu'**il est adapté pour signer électroniquement les USSD entrants.

37. Serveur d'authentification selon l'une des revendications 32 à 36, **caractérisé en ce qu'**il est adapté pour munir les USSD entrants d'un chronotimbre (TS2).

38. Serveur d'authentification selon l'une des revendications 32 à 37, **caractérisé en ce qu'**il contient un profil pour chaque fournisseur de services (1) enregistré.
